# EUROPÄISCHE PATENTSCHRIFT

(11) **EP 3 004 459 B1**
(45) Veröffentlichungstag und Bekanntmachung des Hinweises auf die Patenterteilung: **28.03.2018**
(21) Anmeldenummer: 14724316.6
(22) Anmeldetag: 15.05.2014
(51) Int. Cl.: D21H 21/48, B32B 33/00, B42D 25/387

(54) **SICHERHEITSSUBSTRAT**
SECURITY SUBSTRATE
SUBSTRAT DE SÉCURITÉ

(30) Priorität: 31.05.2013 DE 102013009222
(43) Veröffentlichungstag der Anmeldung: 13.04.2016
(73) Patentinhaber: Giesecke+Devrient Currency Technology GmbH, 81677 München (DE)
(72) Erfinder: SCHIFFMANN, Peter, 81673 München (DE); SCHÜTZMANN, Jürgen, 85276 Pfaffenhofen (DE)
(74) Vertreter: Zeuner Summerer Stütz
(86) Internationale Anmeldenummer: PCT/EP2014/001316
(87) Internationale Veröffentlichungsnummer: WO 2014/191084

(56) Entgegenhaltungen:
- EP-A1- 0 942 031
- EP-A1- 2 453 418
- WO-A1-01/98588
- WO-A2-03/054809
- US-B2- 7 897 212

## Beschreibung

Die vorliegende Erfindung betrifft ein Sicherheitssubstrat für Sicherheitspapiere und Wertdokumente, wie Banknoten, Pässe, Ausweisdokumente oder dergleichen, mit mindestens einem ersten Teilbereich und mindestens einem zweiten Teilbereich, wobei der erste Teilbereich Anatas und kein Rutil und der zweite Teilbereich Rutil und kein Anatas umfasst.

Die Erfindung betrifft ferner ein Wertdokument, umfassend ein Sicherheitssubstrat, ein zugehöriges Herstellungsverfahren und ein Verfahren zur Prüfung der Echtheit.

Unter Sicherheitssubstrat wird nachfolgend zum einen ein Substrat verstanden, das als Sicherheitspapier Verwendung findet. Ein Sicherheitspapier ist mit Sicherheitselementen, wie Wasserzeichen, Sicherheitsfaden, Hologrammpatch usw. ausgestattet, aber noch nicht umlaufunfähig und Zwischenprodukt bei der Herstellung des Wertdokumentes. Zum anderen wird unter Sicherheitssubstrat ein Sicherheitselement verstanden, mit dem Sicherheitspapiere, Wertdokumente etc. ausgestattet sind. Unter Wertdokument wird das umlauffähige Produkt verstanden, also z.B. die bedruckte Banknote.

Wertdokumente, wie beispielsweise Banknoten Aktien, Anleihen, Urkunden, Gutscheine, Schecks, aber auch andere fälschungsgefährdete Papiere, wie Pässe, Karten oder sonstige Ausweisdokumente, werden zur Erhöhung ihrer Fälschungssicherheit mit verschiedenen Sicherheitselementen ausgestattet. Datenträger, wie Wert- oder Ausweisdokumente, aber auch andere Wertgegenstände, wie etwa Markenartikel, werden zur Absicherung oft mit Sicherheitsmerkmalen versehen, die eine Überprüfung der Echtheit des Datenträgers gestatten und die zugleich als Schutz vor unerlaubter Reproduktion dienen. Die Sicherheitsmerkmale können beispielsweise in Form separat hergestellter Sicherheitselemente vorliegen, die in die Datenträger ein- oder aufgebracht werden, beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements, das nach seiner Herstellung auf ein Wertdokument aufgebracht wird. Teilweise werden die Sicherheitsmerkmale auch direkt auf das zu schützende Wertdokument aufgedruckt oder in das Volumen des Wertdokumentsubstrats eingebracht. Die Sicherheitsmerkmale können dabei mit bloßem Auge sichtbar oder auch nur mittels entsprechender Sensoren maschinenlesbar sein.

Als problematisch hat sich erwiesen, dass die mit bloßem Auge erkennbaren Sicherheitsmerkmale dem Fälscher leicht zugänglich und damit leicht nachahmbar sind und die maschinenlesbaren Sicherheitsmerkmale üblicherweise sehr aufwendig in der Herstellung und Verarbeitung sind und oft hohe Anforderungen an die Detektion stellen.

Das Dokument EP 0 942 031 A1 offenbart ein Sicherheitssubstrat nach dem Oberbegriff des Anspruchs 1.

Davon ausgehend liegt der vorliegenden Erfindung die Aufgabe zugrunde, Sicherheitssubstrate für Sicherheitspapiere und Wertdokumente der eingangs genannten Art hinsichtlich ihrer Nachahmungssicherheit weiter zu verbessern und kostengünstig herzustellen.

Diese Aufgabe wird durch das Sicherheitssubstrat mit den Merkmalen des Hauptanspruchs gelöst. Ein entsprechendes Wertdokument sowie ein zugehöriges Herstellungsverfahren und ein Verfahren zur Prüfung der Echtheit sind in den nebengeordneten Ansprüchen angegeben.

Weiterbildungen der Erfindung sind Gegenstand der Unteransprüche.

Bei Anatas und Rutil handelt es sich um Modifikationen von Titandioxid. Beide Modifikationen werden erfindungsgemäß als Pigmente eingesetzt.

Diese können in Form von Beschichtungen oder Druckfarben oder im Transferverfahren auf das Substrat aufgebracht werden.

Bei den Beschichtungen handelt es sich vorzugsweise um Farbannahmeschichten. Diese werden insbesondere bei Polymersubstraten eingesetzt. Besonders bevorzugt sind die erfindungsgemäßen Teilbereiche dieser Farbannahmeschichten mit dem bloßen Auge nicht unterscheidbar.

In bevorzugten Ausführungsformen handelt es sich um Buntfarben, die Rutil oder Anatas enthalten. Die erfindungsgemäßen Teilbereiche können entweder im sichtbaren Spektrum für das bloße Auge nicht unterscheidbar sein, d.h. den gleichen Farbton aufweisen, oder je nach Motiv unterschiedliche Farbtöne aufweisen. Weisen die Druckfarben den gleichen Farbton auf, so ist es möglich beim Stichdruck einen UV-Schnitt zu realisieren.

Die eingesetzten Farben bzw. Beschichtungen auf Basis von Titandioxid können UV-trocknend, wasserbasiert, lösemittelbasiert oder Kombinationen der vorab genannten Varianten sein. Der Anteil an Titandioxid liegt zwischen 5 Gew. % bis 70 Gew. % in der nicht getrockneten Beschichtung.

Die Beschichtungsdicke pro Seite kann zwischen 0,5 µm bis 30 µm (trocken) je nach eingesetztem Beschichtungsverfahren und Anzahl der Einzelschichten sein. Bevorzugt ist die Beschichtungsdicke zwischen 1 µm bis 20 µm pro Seite (trocken).

Das Verfahren zum Herstellen eines erfindungsgemäßen Sicherheitssubstrates umfasst das Bereitstellen eines Trägermaterials, das mit mindestens einem ersten und mindestens einem zweiten Teilbereich ausgestattet wird, wobei der erste Teilbereich Anatas und kein Rutil und der zweite Teilbereich Rutil und kein Anatas umfasst.

Als Trägermaterialien kommen alle wie im Vor- und Nachgang beschriebenen, für die Sicherheitssubstrate denkbaren Substrate in Frage, wie z.B. Polymerfolien, Papiere und Kombinationen daraus.

Neben den bereits beschriebenen Druckverfahren und Beschichtungsverfahren sowie Transferverfahren, kann das Trägermaterial auch bei der Herstellung desselben mit Rutil und Anatas erfindungsgemäß ausgestattet werden.

Bei Polymersubstraten kann beispielsweise bei der Extrusion der Folien Anatas bzw. Rutil dem zu verarbeitenden Kunststoffgranulat beigemengt sein.

Bei papiermacherisch hergestellten Substraten, vorzugsweise mittels Papierrundsiebmaschine, kann Anatas bzw. Rutil in die Papiermasse eingebracht werden. Sobald sich im Papierherstellungsprozess die entsprechenden Papierbahnen gebildet haben, enthalten diese die vorgegebene Titandioxidmodifikation. Insbesondere bei Zweilagenpapieren kann die eine Lage mit Anatas und die andere mit Rutil ausgestattet werden. Es ist auch denkbar in eine der Lagen, vorzugsweise in die rutilhaltige Lage Aussparungen bzw. Fenster einzuarbeiten, so dass beim Zusammenführen der Bahnen von der rutilhaltigen Lage aus gesehen in den Aussparungen bzw. Fenstern die anatashaltige Lage detektierbar ist. Zwischen den Papierlagen kann eventuell noch zusätzlich eine Kunststofffolie vorliegen.

Es besteht auch die Möglichkeit, bei papiermacherisch hergestellten Substraten Anatas bzw. Rutil nach der Blattbildung auf die feuchte Papierbahn aufzubringen. Geeignete Verfahren hierzu sind in der EP 0 659 935 A2 beschrieben.

Als Druckverfahren zur Erzeugung der Teilbereiche eignen sich der Offset-, Hoch-, Flexo-, Tief-, Intaglio-, Ink-Jet-Druck und tonerbasierte Druckverfahren. Bevorzugt werden der Tief- und Flexodruck eingesetzt.

Bei Offset- und Hochdruckverfahren kann der Anteil an Titandioxid bei guten chemischen und physikalischen Beständigkeiten und guter Verdruckbarkeit bis zu 70 % betragen. Auf Grund des hohen spezifischen Gewichts von Titandioxid bei ca. 4g/cm³ liegt bei einer Farbschicht von 1 µm bis 1,5 µm der Anteil an übertragenen Titandioxid bei 2,8 g/m² bis 4,2 g/m².

Bei einer visuell sichtbaren bzw. einer bunten Farbe reduziert sich der Anteil an Titandioxid in der Farbe. Bei 1 Gew.% Buntpigment (organisch) in der Farbe führt dies beispielsweise zu einer Reduzierung an Titandioxid von mindestens 5 Gew. % bis 10 Gew. %, bezogen auf die Masse an Titandioxid.

Bevorzugt werden höheren Konzentration an Titandioxid eingesetzt, da sich damit die Erkennbarkeit mittels Sensor verbessert.

Bei Stichdruckfarben kann der Anteil an Titandioxid in ähnlicher Höhe wie bei Offsetfarben liegen. Allerdings kann die übertragene Schichtdicke je nach Gravurtiefe der Druckplatte zwischen 1 µm bis 30 µm liegen, so dass die auf dem Substrat verankerte Titandioxid-Pigmentkonzentration deutlich höher ist.

Die Beschichtungen und Druckfarben können zusätzlich zu Rutil bzw. Anatas weitere Sicherheitsmerkmale umfassen, beispielsweise Magnetpigmente, Lumineszenzstoffe, Stoffe mit optisch variablen Eigenschaften wie Flüssigkristalle oder Dünnschichtpigmente, Stoffe mit im IR-lesbaren Eigenschaften usw.

Weiterhin lässt sich das Merkmal auch auf Basis von Transferverfahren erzeugen, bei dem sich mittels Heiß- oder Kaltpräge-Transferverfahren Lackschichten auf Basis von Titandioxid applizieren lassen. Weiterhin können auch Transferfolien mit solchen Eigenschaften appliziert werden. Die Lackschichten oder das Folienelement können auch bereits mindestens beide erfindungsgemäße Teilbereiche oder nur einen Teilbereich aufweisen.

Der mindestens erste und mindestens zweite Teilbereich liegen auf der Oberfläche des Substrates und/oder im Volumen des Substrates.

Dabei sind alle Kombinationen denkbar, bei denen der erste und/oder zweite Teilbereich auf der Oberfläche des Substrats aufgedruckt ist. Vorzugsweise liegen der mindestens erste und mindestens zweite Teilbereich auf der Oberfläche des Substrates.

Die Teilbereiche können auf der Vorder- und/oder Rückseite des Substrates vorliegen.
Die Teilbereiche können nebeneinander (Stoß an Stoß oder beabstandet), übereinander oder teilweise überlappend vorliegen. Vorzugsweise liegen die Teilbereiche nebeneinander.

Die Teilbereiche können auch ineinander übergehen. Beispielsweise können im Überlappungsbereich die Schichtdicke und/ oder Flächenbedeckung des einen Teilbereichs abnehmen und die des anderen Teilbereichs zunehmen.

Es ist möglich, dass beispielsweise der mindestens erste Teilbereich auf der Oberfläche des Substrates und der mindestens zweite Teilbereich im Volumen des Substrates vorliegt.

Ein Teilbereich kann insbesondere vollflächig oder als Motiv ausgestaltet sein. Unter dem Begriff "Motiv" ist insbesondere ein Muster oder ein Bild zu verstehen. Das Motiv kann darüber hinaus eine Information vermitteln, indem es z.B. ein Zeichen, eine Zeichenfolge, eine Codierung (z.B. Barcode) oder eine Bildinformation aufweist.

Liegt der Teilbereich im Volumen des Substrates vor, ist es möglich dreidimensionale Motive zu gestalten.

Weiterhin können bei mehrlagigen Substraten der mindestens erste und der mindestens zweite Teilbereich in oder auf unterschiedlichen Lagen vorliegen.

Die Größe und Abmessung der Teilbereiche richtet sich ganz nach den gewünschten Motiven und den eingesetzten Sensoren zum Vermessen des Merkmals. Dies ist dem Fachmann bekannt.
Mit Bezug auf das Substrat gibt es keine speziellen Beschränkungen. Als Materialien eignen sich Papier, Kunststoff oder Kombinationen davon.

Das Substrat kann dabei sowohl als Sicherheitselement, als Sicherheitspapier oder als Wertdokument eingesetzt werden.

Beispielsweise werden Sicherheitspapiere für Banknoten typischerweise aus Fasern von Einjahrespflanzen, insbesondere Baumwollfasern, hergestellt.

Es können auch Papiere verwendet werden, die zum Teil Kunststofffasern, vorzugsweise Polyamidfasern oder Polyesterfasern, aufweisen. In einer weiteren Alternative kann der Faseranteil der Papiere vollständig aus Kunststofffasern bestehen.

Als Wertdokumentsubstrat eignet sich darüber hinaus insbesondere eine Polymerfolie (bzw. Kunststofffolie), die eine geeignete Farbannahmeschicht aufweist. Vorzugsweise besteht die Polymerfolie aus biaxial gerecktem Polypropylen (BOPP).

Besonders bevorzugt wird ein Baumwollpapier als Substrat verwendet. Das Flächengewicht des Substrats variiert je nach Anwendungsform. Übliche Flächengewichte liegen im Bereich von 50 g/m² bis 100 g/m², vorzugsweise im Bereich 60 g/m² bis 90 g/m².

Das Substrat kann einlagig oder mehrlagig sein.

Bei mehrlagigen Substraten können die einzelnen Lagen aus gleichen oder aus unterschiedlichen Materialien bestehen. Beispielweise kann eine Lage ein reines Baumwollpapier sein, während eine weitere Lage Kunststofffasern aufweist. Des Weiteren können als Substrat auch mehrlagige Papier/FolienVerbunde herangezogen werden, wie etwa ein Papier/ Folien/ Papier-Verbund oder ein Folie/Papier/Folie-Verbund.

Das Substrat kann des Weiteren mit üblichen Sicherheitselementen ausgestattet sein, wie z.B. Fenstern, Sicherheitsfäden, Patches, etc. Auch diese Sicherheitselemente können im Sinne der Erfindung als Sicherheitssubstrat gesehen werden.

Das erfindungsgemäße Sicherheitssubstrat lässt sich vorteilhafterweise auch für kartenbasierte Wertdokumente (z.B. Kreditkarten, ID-Dokumente, wie Pässe, Führerscheine, Ausweise, usw.) einsetzen.

Kartenbasierte Wertdokumente bestehen in der Regel aus einem mehrschichtigen Folienaufbau. Die Folien werden in der Regel bei hoher Temperatur und Druck zu einem Kartenkörper laminiert, der die notwendigen Beständigkeiten aufweist.

Bevorzugt nimmt man für die außen liegenden Deckfolien transparente Folien und für den innen liegenden Kern deckende Folien. Des Weiteren wird bevorzugt die äußere deckende Folie bedruckt, so dass die Druckschicht durch die auflaminierte transparente Deckfolie vor physikalischen Einflüssen, wie Kratzen usw., geschützt wird. Die deckenden Folien enthalten in der Regel Titandioxid als deckende Komponente im Polymer (z.B. PVC, PA, Polycarbonat usw.).

Besonders bevorzugt sind folgende Aufbauten, wobei die Varianten 1-3 nicht zum Gegenstand der Erfindung gehören:
Variante 1:
   Die Vorderseiten-Deckfolie enthält Anatas und die Rückseiten-Deckfolie enthält Rutil. Die Detektion erfolgt in Reflektion von der jeweiligen Seite aus.
Variante 2:
   Eine Deckfolie (Vorder- und/ oder Rückseite) ist aus mindestens zwei Streifen zusammengesetzt, wobei jeweils ein Streifen Anatas und einer Rutil umfasst. Bei mehreren Streifen können sich die rutil- mit den anatashaltigen Streifen abwechseln.
Variante 3:
   Eine der Deckfolien enthält Rutil und mindestens eine Aussparung (z.B. Ausstanzung), die andere Deckfolie enthält Anatas. Erfolgt die Messung von der Seite der rutilhaltigen Deckfolie aus, erkennt der Sensor im Fensterbereich das Anatas, im übrigen Bereich das Rutil.
Variante 4:
   Mindestens eine der Folien im Kartenkörper ist mit einer anatashaltigen und einer rutilhaltigen Druckfarbe auf mindestens einer Seite des Kartenkörpers bedruckt, wobei die Druckfarben bevorzugt einen visuell nicht unterscheidbaren Farbton aufweisen.

Selbstverständlich sind auch Variationen denkbar, bei denen anatas- bzw. rutilpigmenthaltige Folien mit anatas- bzw. rutilhaltigen Druckfarben bedruckten transparenten Folien kombiniert werden.

Des Weiteren sind kartenbasierte Wertdokumente aller Art, d.h. ausschließlich auf Polymerschichten basierte, aber auch papierbasierte und Kombinationen von Papier- mit Polymerschichten möglich.

Papiergebundene Passsysteme bestehen in der Regel aus einem Cover (oft kartonbasiert mit aufkaschierter Folie) und einem eingenähten Heftinnenteil. Die erste Seite des Innenteils ist dabei in der Regel die Datenseite. Die Personalisierung der Datenseite erfolgt in der Regel bei Behörden als dezentrale Personalisierung. Aus Gründen der geringeren Investitionskosten hat sich dabei der klassische Ink-Jet-Druck durchgesetzt. Eine Alternative zu der Ink-Jet-Personalisierung ist der Laserdruck oder der Thermotransferdruck.

Bei einer zentralen Personalisierung wird oft die Laserpersonalisierung eingesetzt, bei der die Daten mittels Laser in einer Kunststofffolie eingebrannt werden (=> fühlbare Markierung). Die Kunststofffolie wird aus Sicherheitsgründen in der Regel in dem Heft mit eingebunden.

Das erfindungsgemäße Sicherheitssubstrat wird bevorzugt als Passdatenseite zur Absicherung eingesetzt, da hier die höchsten Anforderungen an die Sicherheit gegeben sind.

Das erfindungsgemäße Sicherheitssubstrat kann durch geeignete Auswahl der Teilbereiche individualisiert eingesetzt werden. Die individualisierte Information kann dabei die Pass-Nummer sein. In dem Fall kann diese Information schon bei der Anfertigung des Heftes erfolgen.

Bei einer weiteren Variante werden personenbezogene Daten, z.B. Name, Geburtstag, Portrait, mittels erfindungsgemäßem Sicherheitssubstrat eingebracht.

Das Verfahren zur Prüfung, insbesondere der Echtheit, eines erfindungsgemäßen Sicherheitssubstrats umfasst das Beleuchten mit ultraviolettem Licht und das Bewerten des durch das Sicherheitssubstrat transmittierten oder reflektierten ultravioletten Lichts für die Überprüfung der Echtheit des Sicherheitssubstrats, wobei das von Anatas und Rutil vermessene Transmissions- bzw. Reflektionsspektrum bewertet wird. Da sich die Titanmodifikationen Anatas und Rutil im UV-Bereich unterscheiden, ist es möglich, ein visuell nicht erkennbares, aber maschinenlesbares Merkmal zu realisieren.

Der hierin verwendete Begriff "ultraviolettes Licht" bezeichnet insbesondere Licht mit einer Wellenlänge in einem Bereich von 235 nm bis 380 nm.

Insbesondere wird bewertet, ob im UV-Spektralbereich die unterschiedlichen Spektren von Anatas und Rutil in Bezug auf die Teilbereiche erkennbar sind.

Gemäß Stand der Technik wird üblicherweise nur eine der Titanmodifikationen eingesetzt, z.B. als Keimtöter in Farben bzw. in der Papiermasse als Opazitätserhöher (Anatas) oder als vergilbungsstabiles Weißpigment im Papierstrich (Rutil). Auch Mischungen sind bereits eingesetzt worden. Rutil und Anatas in einem Substrat in verschiedenen Teilbereichen einzusetzen und diese als Sicherheitsmerkmal auszuwerten, ist allerdings noch nicht bekannt.

Als Sensor kann ein UV-Transmissionssensor, wie in der WO/03054809 A2 beschrieben, oder ein UV-Remissionssensor, wie in der DE 101 60 580 A1 beschrieben, verwendet werden.

Die Empfindlichkeit des Sensors liegt bei 370 nm mit einer Halbwertsbreite von 70 nm (definiert über den eingesetzten Filter).

Der Nachweis des UV-Merkmals kann sowohl in Transmission, in Reflektion als auch in Kombination erfolgen. Der Sensor kann auf einer Zeilen- oder Matrixkamera zur Bilderfassung beruhen.

Um den relevanten Spektralbereich (UV- und naher VIS-Bereich) für die Prüfung zu nutzen, gibt es prinzipiell nachfolgende Möglichkeiten:
- Beleuchtung mit Leuchtkörpern (z.B. LED) im Bereich des zu prüfenden Wellenlängenbereichs und Bildsensor mit einer Empfindlichkeit mindestens im zu prüfenden Wellenlängenbereich;
- Bildsensor mit einer Empfindlichkeit im Bereich des zu prüfenden Wellenlängenbereichs (z.B. durch Verwendung entsprechender Filter) und Leuchtkörper mit einer Emission mindestens im zu prüfenden Wellenlängenbereich;
- Beleuchtung mit Leuchtkörpern (z.B. LED) im Bereich des zu prüfenden Wellenlängenbereichs und Bildsensor mit einer Empfindlichkeit im zu prüfenden Wellenlängenbereich.

Das erfindungsgemäße Sicherheitssubstrat (einschließlich seiner Weiterbildungen) kann als Sicherheitselement, insbesondere als Sicherheitselement für ein Sicherheitspapier, Wertdokument oder dergleichen, eingesetzt werden. Insbesondere wird ein Sicherheitspapier und ein Wertdokument mit einem erfindungsgemäßen Sicherheitssubstrat (einschließlich seiner Weiterbildungen) bereitgestellt.

Das Sicherheitssubstrat kann insbesondere als Sicherheitsfaden, Aufreißfaden, Sicherheitsband, Sicherheitsstreifen, Patch oder als Etikett zum Aufbringen auf ein Sicherheitspapier, Wertdokument oder dergleichen ausgebildet sein. Insbesondere kann das Sicherheitssubstrat transparente Bereiche oder Ausnehmungen überspannen.

Das Sicherheitssubstrat kann auch das Sicherheitspapier selbst sein.

Unter dem Begriff Sicherheitspapier wird hier insbesondere die noch nicht umlauffähige Vorstufe zu einem Wertdokument verstanden, die neben dem erfindungsgemäßen Sicherheitssubstrat beispielsweise auch weitere Echtheitsmerkmale (wie z.B. im Volumen vorgesehene Lumineszenzstoffe) aufweisen kann. Unter Wertdokumenten werden hier einerseits aus Sicherheitspapieren hergestellte Dokumente verstanden. Andererseits können Wertdokumente auch sonstige Dokumente und Gegenstände sein, die mit dem erfindungsgemäßen Sicherheitssubstrat versehen werden können, damit die Wertdokumente nicht kopierbare Echtheitsmerkmale aufweisen, wodurch eine Echtheitsprüfung möglich ist und zugleich unerwünschtes Kopieren verhindert wird.

Anatas und Rutil in der erfindungsgemäßen Verwendung sind leicht verfügbare und verarbeitbare, dennoch preisgünstige Sicherheitsmerkmale, die maschinell leicht detektierbar, aber nicht unmittelbar mit dem bloßen Auge erkennbar sind.

Es versteht sich, dass die vorstehend genannten und die nachstehend noch zu erläuternden Merkmale nicht nur in den angegebenen Kombinationen einsetzbar sind, sondern dass der Gegenstand der Erfindung in den Ansprüchen definiert ist.

Nachfolgend wird die Erfindung beispielshalber anhand der beigefügten Figuren, die auch erfindungswesentliche Merkmale offenbaren, noch näher erläutert. Zur besseren Anschaulichkeit wird in den Figuren auf eine maßstabs- und proportionsgetreue Darstellung und auf Schraffuren verzichtet. Es zeigen:
- Fig.1: eine Draufsicht einer Banknote mit erfindungsgemäßen nebeneinander angeordneten Teilbereichen;
- Fig. 2a: eine vergrößerte Schnittdarstellung der Banknote von Fig. 1;
- Fig. 2b: eine Schnittansicht mit erfindungsgemäßen Teilbereichen;
- Fig. 3: eine Draufsicht einer Banknote mit einem Sicherheitsfolienstreifen, ausgestattet mit erfindungsgemäßen Teilbereichen;
- Fig. 4: eine vergrößerte Schnittdarstellung der Banknote von Fig. 3;
- Fig. 5: eine Draufsicht einer Banknote mit erfindungsgemäßen übereinander angeordneten Teilbereichen;
- Fig. 6a: eine vergrößerte Schnittdarstellung der Banknote von Fig. 5;
- Fig. 6b: eine vergrößerte alternative Schnittschnittdarstellung der Banknote von Fig. 5;
- Fig. 7: eine Schnittansicht mit erfindungsgemäßen Teilbereichen und einem Teilbereich mit einer Mischung aus Anatas und Rutil;
- Fig. 8: eine Schnittansicht mit erfindungsgemäßen Teilbereichen und Aufdruck;
- Fig. 9: Remissionskurven von Anatas und Rutil;
- Fig. 10: Transmissionskurven von Anatas und Rutil;

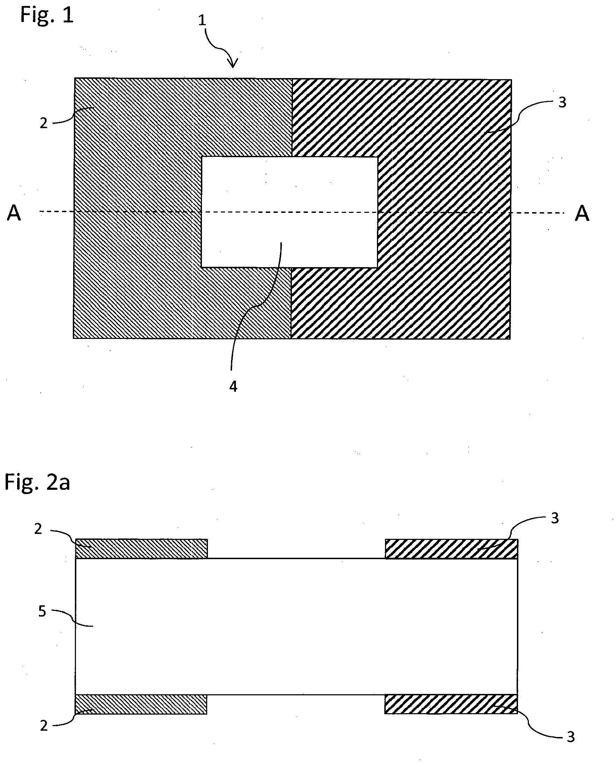

Fig.1 zeigt eine Polymerbanknote 1 mit einer deckenden Beschichtung als Farbannahmeschicht auf der Oberfläche der an sich transparenten Polymerfolie auf Basis von BOPP mit einer Dicke von 100 µm, wobei ein erster Teilbereich 2 mit einer Beschichtung auf Basis von Anatas (kein Rutil enthaltend) und ein zweiter Teilbereich 3 auf Basis von Rutil (kein Anatas enthaltend) beschichtet ist. Der Bereich 4 ist unbeschichtet, so dass an dieser Stelle das transparente Substrat zu erkennen ist.

Fig. 2a zeigt eine vergrößerte Schnittdarstellung der Banknote entlang der Linie A-A in Fig. 1. Das Substrat 5 ist sowohl auf der Vorder- als auch auf der Rückseite mit einem ersten Teilbereich 2 (anatashaltig) und einem zweiten Teilbereich 3 (rutilhaltig) beschichtet. Selbstverständlich können die erfindungsgemäßen Teilbereiche auch nur auf der Vorder- oder Rückseite vorliegen.

In der gezeigten Variante sind die ersten und zweiten Teilbereiche jeweils deckungsgleich auf Vorder- und Rückseite angeordnet. Selbstverständlich ist dies nicht zwingend notwendig. So können die Teilbereiche auf Vorder-und/ oder Rückseite beliebig angeordnet werden, solange die rutil- und anatashaltigen Teilbereiche vermessen werden können.

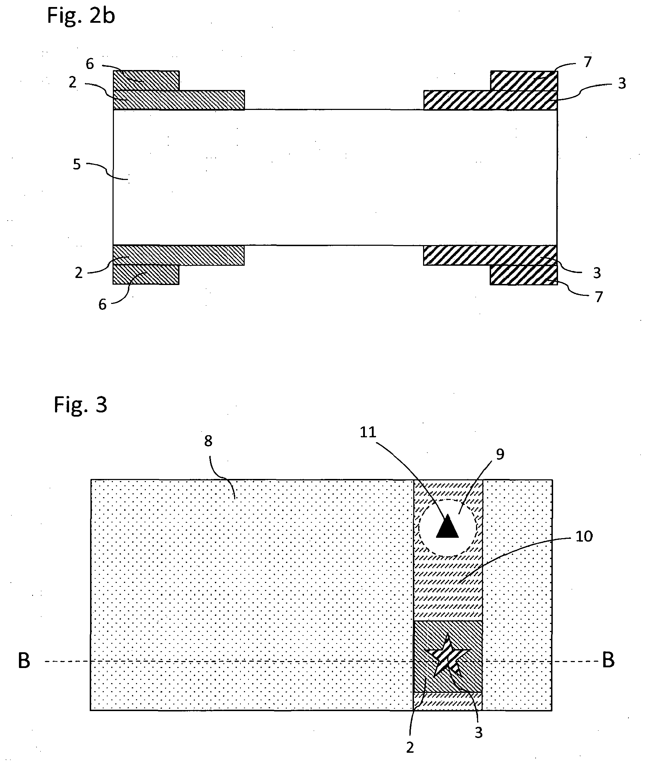

Fig. 2b zeigt eine Schnittansicht wie in Fig. 2a, wobei die jeweiligen Teilbereiche aus mehreren Schichten bestehen. Auf der anatashaltigen Schicht 2 ist eine weitere anatashaltige Schicht 6 aufgebracht. Auf der rutilhaltigen Schicht 3 ist eine weitere rutilhaltige Schicht 7 aufgebracht. Im Bereich der Überlappung, in dem mehrere anatas- bzw. rutilhaltige Schichten übereinanderliegen, wird durch Erhöhung der jeweiligen Titandioxidmenge pro vermessener Fläche eine verbesserte Maschinenlesbarkeit erreicht. Durch die Überlagerung von mindestens zwei oder mehr Schichten kann auch ganz gezielt die Opazität gesteuert werden. Bei geeigneter Anordnung und Überlagerung mehrerer Schichten entsteht somit ein sogenanntes PseudoWasserzeichen, d.h. verschiedene Hell-/ Dunkelbereiche, die mit dem bloßem Auge erkennbar sind. In diesem Fall wird ein mit bloßem Auge erkennbares Merkmal (Pseudowasserzeichen) mit dem erfindungsgemäßen, nur maschinenlesbaren Merkmal verbunden, was zu einem deutlich besserem Fälschungsschutz führt.

Fig. 3 zeigt eine klassische Banknote aus Baumwollsubstrat 8, die ein Loch 9 aufweist. Dieses kann papiermacherisch bereits bei der Herstellung des Papiersubstrates eingearbeitet sein oder nachträglich gestanzt werden.

Parallel zur kurzen Seite der Banknote und über dem Lochbereich befindet sich ein transparenter Foliensteifen 10, der üblicherweise ca. 1 cm bis 2 cm breit ist und mit verschiedensten Sicherheitsmerkmalen ausgestattet sein kann. Vorzugsweise handelt es sich dabei um Hologrammprägungen, Fluoreszenzaufdrucke, Dünnschichtbeschichtungen mit Farbkippeffekt etc. Die Sicherheitsmerkmale können beliebig angeordnet werden. Beispielsweise ist bei vorliegender Banknote ein Symbol 11 aus Flüssigkristall im Lochbereich aufgedruckt.

Der erfindungsgemäße erste anatashaltige Teilbereich 2 und der erfindungsgemäße zweite rutilhaltige Teilbereich 3 befinden sich ebenfalls auf dem Folienstreifen 10 und sind passergenau aufgedruckt. Mit dem bloßem Auge ist kein Unterschied zwischen Teilbereich 2 und 3 feststellbar, sondern diese sind als einfarbige Rechteckfläche erkennbar. Es versteht sich von selbst, dass sich jedes beliebige Muster aus den erfindungsgemäßen Teilbereichen in ein Design integrieren lässt.

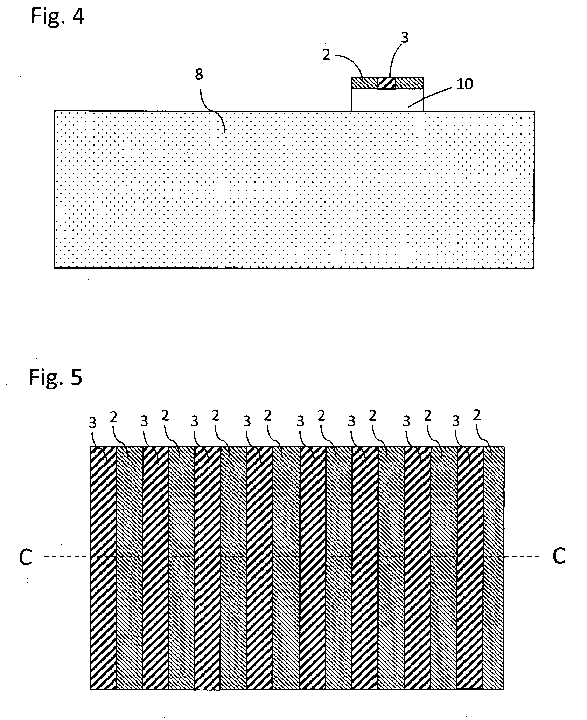

In Fig. 4 ist die vergrößerte Schnittdarstellung der Banknote aus Fig. 3 entlang der Linie B-B abgebildet. Auf dem Baumwollsubstrat 8 liegt der Folienstreifen 10. Der Streifen ist aufgeklebt. Der Kleber selbst ist nicht dargestellt.

Fig. 5 zeigt ein weiteres Ausführungsbeispiel einer Banknote mit erfindungsgemäßen Teilbereichen in Aufsicht.

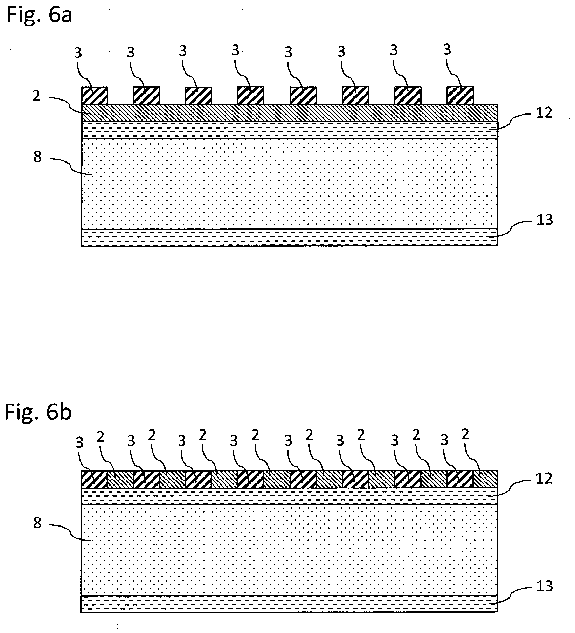

Die anatashaltigen Teilbereiche 2 und rutilhaltigen Teilbereiche 3 zeigen in Aufsicht eine streifenförmige Anordnung, die wie die Schnittdarstellungen in Fig. 6a und Fig. 6b gezeigten, auf unterschiedliche Weise realisiert werden kann. In diesen beiden Varianten wurde ein klassischer 1D-Barcode realisiert. Selbstverständlich ist es auch möglich, einen 2D-Barcode, bei einem mehrschichtigen Aufbau auch einen 3D-Barcode oder andere maschinenlesbare Codes zu realisieren. Die Codes können sowohl die gesamte Oberfläche der Banknote oder allgemein des Wertdokumentes einnehmen oder auch nur Teilabschnitte bedecken. Denkbar ist beispielsweise, den Code nur in - nicht dargestellten - Fensterbereichen einzubringen oder in Randbereichen verlaufen zu lassen. Der Code ist nur maschinenlesbar und mit bloßem Auge nicht erkennbar. Die verschiedenen Teilbereiche erscheinen dem Auge als einheitliche Fläche.

Fig. 6a zeigt eine Schnittdarstellung der Banknote in Fig. 5 entlang der Linie C-C. Beim Banknotensubstrat handelt es sich in dieser Ausführungsform um ein Komposit aus Papier und Folie. Der Kern des Komposits besteht aus üblichem Baumwollpapier 8, das mit zwei sehr dünnen Folien 12,13 beschichtet ist. Die Folien können z.B. auf das Papier aufextrudiert oder aufkaschiert sein. Die erfindungsgemäßen Teilbereiche dienen als Farbannahmeschichten und bedecken die gesamte Oberfläche des Substrates. Auf eine Oberfläche einer Folie ist vollflächig der erste anatashaltige Teilbereich 2 aufgedruckt. Auf den anatashaltigen Teilbereich ist der zweite rutilhaltige Teilbereich streifenförmig - oder gemäß den entsprechenden Vorgaben einer anderen Codierung - aufgedruckt. Vorzugsweise wird die Vermessung von der der rutilhaltigen Beschichtung zugewandten Seite aus durchgeführt. Da Rutil im längerwelligen UV-Bereich absorbiert, ist das darunterliegende Anatas bei der Messung des Rutils quasi nicht sichtbar und stört somit nicht.

Fig. 6b zeigt eine alternative Schnittdarstellung der Banknote in Fig. 5 entlang der Linie C-C. Wie in Fig. 6a handelt es sich um den Folien-Papier-Folienaufbau aus Fig. 6a. Die anatashaltigen Teilbereiche und die rutilhaltigen Teilbereiche sind in dieser Ausführungsform nicht übereinander, sondern nebeneinander gedruckt. Vorzugsweise sind diese passergenau angeordnet.

Selbstverständlich können die Codierungen auch nur eine kleine Fläche auf der Banknote einnehmen, müssen also nicht zwingend die gesamte Fläche bedecken. Die Codierung kann auch zusätzlich in ein erfindungsgemäßes Motiv, wie in Fig. 3 gezeigt, integriert werden. In diesem Fall kann eine kleinformatige Codierung aus erfindungsgemäßen Teilbereichen in ein großflächiges Motiv aus erfindungsgemäßen Teilbereichen integriert werden. Bei Verwendung unterschiedlich auflösender Sensoren ist es somit möglich, die unterschiedlichen Motive und/ oder Codierungen zu vermessen. Besonders interessant ist dies dann, wenn verschiedene Messstationen unterschiedliche Berechtigungen zugewiesen bekommen. So ist es sinnvoll, dass an einer Geschäftskasse beispielsweise nur das grobstrukturierte Motiv mit dem niedrigauflösenden Sensor gemessen werden kann, während bei Banken auch der hochauflösende Sensor zur Verfügung steht, um die feinstrukturierte Codierung zu vermessen.

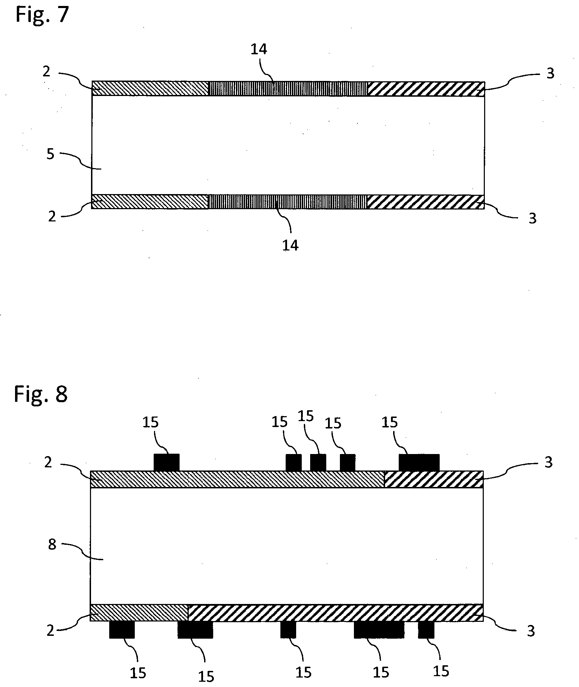

Fig. 7 zeigt eine Schnittansicht einer Banknote aus transparentem Polymersubstrat 5 mit den erfindungsgemäßen Teilbereichen 2 und 3 sowie die Mischbereiche 14. Die Teilbereiche 2 umfassen Anatas und kein Rutil, die Teilbereiche 3 umfassen Rutil und kein Anatas und die Mischbereiche 14 umfassen sowohl Anatas als auch Rutil. Anatas und Rutil liegen in den Bereichen 14 vorzugsweise als Mischung vor. Selbstverständlich ist es möglich, dass nur eine Seite der Banknote mit einem Bereich 14 ausgestattet ist oder Vorder- und Rückseite der Banknote auch mit nicht deckungsgleichen Teilbereichen ausgestattet sind. Auch eine nur teilweise Bedeckung der Banknotenoberflächen ist möglich.

Fig. 8 zeigt eine Schnittansicht mit erfindungsgemäßen Teibereichen 2, 3 und Aufdruck 15. Beim Substrat 8 handelt es sich um ein Baumwollsubstrat, wie es klassischerweise bei der Banknotenherstellung eingesetzt wird. Das Papiersubstrat kann auch bereits als Füllstoff ein Titandioxid in der Masse von 1% bis 6%, vorzugsweise 1% bis 4%, besonders bevorzugt 1% bis 2% enthalten. Als Substrat kann wahlweise auch ein Folienkern mit zwei äußeren Papierschichten oder ein Papierkern mit aufkaschierten Folien dienen. Die erfindungsgemäßen Teilbereiche 2, 3 dienen hier als Farbannahmeschicht für den Aufdruck 15. Bei dem Aufdruck handelt es sich um einen Untergrunddruck mittels Offsetdruckfarben. Die Vermessung der Anatas- und Rutilspektren im UV-Spektralbereich werden dadurch so gut wie nicht beeinträchtigt. Alternativ zum Offsetdruckverfahren können auch Flexo-, Stichtiefdruck- oder Ink-Jet-Druckverfahren mit geeigneten Farben eingesetzt werden.

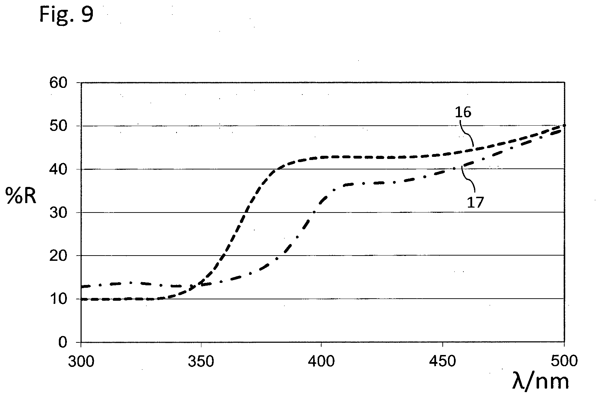

Fig. 9 zeigt das Remissionsspektrum von Anatas 16 und das Remissionsspektrum von Rutil 17.

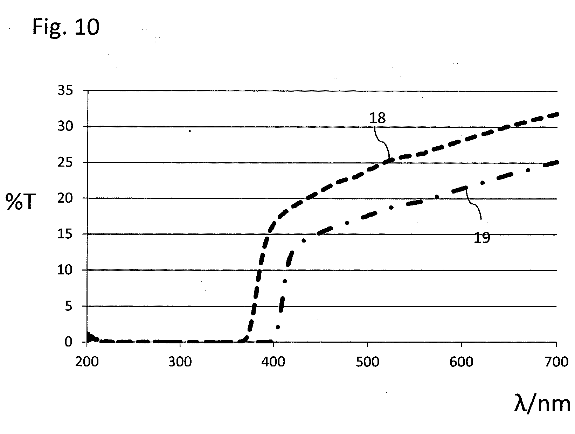

Fig. 10 zeigt das Transmissionsspektrum von Anatas 18 und das Transmissionsspektrum Rutil 19.

Für die Spektren aus Fig. 9 und Fig. 10 wurde jeweils eine transparente BOPP-Folie vermessen, die bezüglich des Anatasspektrums mit einer Siebdruckfarbe auf Basis 15 Gew. % Anatas und 85 Gew. % Siebdruckmittel 3850 von Giesecke & Devrient GmbH bedruckt wurde. Die Vorderseite wurde mit zwei und die Rückseite mit einer Siebdruckschicht (jeweils ca. 10 µm Nassfilmschichtdicke) bedruckt.

Bezüglich des Rutilspektrums wurde eine transparente BOPP-Folie mit einer Siebdruckfarbe auf Basis 15 Gew. % Rutil und 85 Gew. % Siebdruckmittel 3850 von Giesecke & Devrient GmbH bedruckt. Die Vorderseite wurde mit zwei und die Rückseite mit einer Siebdruckschicht (jeweils ca. 10 µm Nassfilmschichtdicke) bedruckt.

Die Messungen erfolgten am UV-VIS-IR-Spektrometer 900 der Firma Perkin Elmer mit Ulbrichtkugel. Dazu wurde am Probenhalter außen ein Weißstandard befestigt, am Lichtstrahleintrittsbereich der Ulbrichtkugel eine Messblende (schwarzer Karton mit kreisförmiger 5 mm Öffnung) und die zu prüfende Probe fixiert. Als Referenz wurde die Messung gegen Luft genutzt. Gemessen wurde im Wellenlängenbereich von 200 nm bis 700 nm.

Wie zu erkennen ist, ist das Spektrum der Anatasbeschichtung im Vergleich zum Spektrum der Rutilbeschichtung um ca. 30 nm zu niedrigeren Wellenlängen verschoben. Beide Spektren sind somit leicht messtechnisch zu unterscheiden und leicht auszuwerten.

Ähnliche Ergebnisse (Spektren nicht gezeigt) ergeben sich bei der Vermessung von antas- bzw. rutilhaltigen Stichtiefdruckfarben auf Baumwollpapier. Hierzu wurden 70 Gew. % Anatas bzw. Rutil in 30 Gew. % Stichdruckbindemittel dispergiert (mittels Dreiwalzenstuhl). Anschließend wurde das erzeugte Halbfabrikat mit 60 Gew. % Anteil mit 20 Gew. % Stichdruck-Basisfarbe Blau-Grünlich 9SL 4701 S der Firma SICPA und 20 Gew. % Transparentweiß 9SL 0700 S der Firma SICPA und 3 Gew. % Trockenstoff 870950 der Firma SICPA ergänzt.

Jeweils eine Farbe wurde anschließend mit einem Farbauftrag von 10 g/m² Farbauftragsgewicht auf Standard Baumwollsubstrat der Firma Papierfabrik Louisenthal GmbH mittels IGT-Probedruckgerät angedruckt.

Aufgrund der Zusammensetzung des Bedruckstoffs und der Farbzusammensetzung ergeben sich nachfolgende Verhältnisse:
Der Anteil an Anatas oder Rutil liegt im Baumwollpapier zwischen 2 Gew. % bis 4 Gew.%, bezogen auf das Papiergewicht.

Dem steht bei einem Farbauftrag auf das Substrat von 10 g/m² Stichtiefdruckfarbe ein Anteil von 4,2 g bzw. 4,2 Gew.% Anatas bzw. Rutil gegenüber, wenn das spezifische Gewicht von Bindemittel, den enthaltenen Additiven und des organischen Blaupigments von 1g/cm³ angenommen wird.

### Bezugszeichenliste

- 1: Polymerbanknote
- 2: Teilbereich mit Anatas
- 3: Teilbereich mit Rutil
- 4: unbeschichteter Bereich
- 5: Substrat
- 6: anatashaltige Schicht
- 7: rutilhaltige Schicht
- 8: Baumwollsubstrat
- 9: Loch
- 10: Folienstreifen
- 11: Symbol
- 12: dünne Folie
- 13: dünne Folie
- 14: Teilbereich mit Anatas und Rutil
- 15: Überdruck
- 16: Reflexionsspektrum Anatas
- 17: Reflexionsspektrum Rutil
- 18: Transmissionsspektrum Anatas
- 19: Transmissionsspektrum Rutil

## Patentansprüche

1. Sicherheitssubstrat für Sicherheitspapiere, Wertdokumente und dergleichen mit mindestens einem ersten Teilbereich (2) und mindestens einem zweiten Teilbereich (3), wobei der erste Teilbereich Anatas und kein Rutil und der zweite Teilbereich Rutil und kein Anatas umfasst, **dadurch gekennzeichnet, dass** der erste und/oder zweite Teilbereich auf der Oberfläche des Substrates aufgedruckt ist.

2. Sicherheitssubstrat nach Anspruch 1, **dadurch gekennzeichnet, dass** der erste Teilbereich auf der Oberfläche oder im Volumen des Substrates vorliegt.

3. Sicherheitssubstrat nach Anspruch 1 oder 2, **dadurch gekennzeichnet, dass** der zweite Teilbereich auf der Oberfläche oder im Volumen des Substrates vorliegt.

4. Sicherheitssubstrat nach wenigstens einem der Ansprüche 1 bis 3, **dadurch gekennzeichnet, dass** das Substrat mindestens eine Lage aus Papier, vorzugsweise Baumwollpapier umfasst.

5. Sicherheitssubstrat nach wenigstens einem der Ansprüche 1 bis 4, **dadurch gekennzeichnet, dass** das Substrat mindestens eine Lage aus Kunststoff umfasst.

6. Sicherheitssubstrat nach wenigstens einem der Ansprüche 1 bis 5, **dadurch gekennzeichnet, dass** das Substrat streifenförmig oder patchförmig ausgestaltet ist.

7. Sicherheitssubstrat nach wenigstens einem der Ansprüche 1 bis 6, **dadurch gekennzeichnet, dass** das Substrat als Sicherheitsfaden oder als Sicherheitspapier für Wertdokumente ausgestaltet ist.

8. Wertdokument, wie Banknote, Ausweis oder dergleichen, **dadurch gekennzeichnet, dass** dieses ein Substrat nach wenigstens einem der Ansprüche 1 bis 7 umfasst.

9. Verfahren zum Herstellen eines Sicherheitssubstrates nach wenigstens einem der Ansprüche 1 bis 7, das folgende Schritte umfasst:
- Bereitstellen eines Trägermaterials, und
- Ausstatten des Trägermaterials mit mindestens einem ersten und einem zweiten Teilbereich wobei der erste Teilbereich Anatas und kein Rutil und der zweite Teilbereich Rutil und kein Anatas umfasst,
**dadurch gekennzeichnet, dass**
- der erste und/ oder zweite Teilbereich auf der Oberfläche des Substrates aufgedruckt wird.

10. Verfahren zum Herstellen eines Sicherheitssubstrates nach Anspruch 9, **dadurch gekennzeichnet, dass** das Trägermaterial mindestens eine Lage Papier oder mindestens eine Lage Kunststoff oder eine Kombination davon umfasst.

11. Verfahren zum Herstellen eines Sicherheitssubstrates nach Anspruch 9 oder 10, **dadurch gekennzeichnet, dass** der erste Teilbereich auf der Oberfläche und/oder in das Volumen des Substrates auf- bzw. eingebracht wird.

12. Verfahren zum Herstellen eines Sicherheitssubstrates nach wenigstens einem der Ansprüche 9 bis 11, **dadurch gekennzeichnet, dass** der zweite Teilbereich auf der Oberfläche und/ oder in das Volumen des Substrates auf- bzw. eingebracht wird.

13. Verwendung eines Sicherheitssubstrates nach wenigstens einem der Ansprüche 1 bis 7 als Sicherheitselement, Sicherheitspapier, Wertdokument oder dergleichen.

14. Verfahren zur Prüfung, insbesondere der Echtheit, eines Sicherheitssubstrats nach wenigstens einem der Ansprüche 1 bis 7, wobei das Sicherheitssubstrat mit ultraviolettem Licht ortsaufgelöst beleuchtet wird und das durch das Sicherheitssubstrat transmittierte oder reflektierte ultraviolette Licht für die Überprüfung der Echtheit des Sicherheitssubstrats bewertet wird, **dadurch gekennzeichnet, dass** bewertet wird, ob im UV-Spektralbereich die unterschiedlichen Spektren von Anatas und Rutil in Bezug auf die Teilbereiche erkennbar sind.

## Claims

1. A security substrate for security papers, value documents and the like having at least a first sub-region (2) and at least a second sub-region (3), the first sub-region comprising anatase and no rutile, and the second sub-region rutile and no anatase, **characterized in that** the first and/or second sub-region is imprinted on the surface of the substrate.

2. The security substrate according to claim 1, **characterized in that** the first sub-region is present on the surface or in the volume of the substrate.

3. The security substrate according to claim 1 or 2, **characterized in that** the second sub-region is present on the surface or in the volume of the substrate.

4. The security substrate according to at least one of claims 1 to 3, **characterized in that** the substrate comprises at least one layer composed of paper, preferably cotton paper.

5. The security substrate according to at least one of claims 1 to 4, **characterized in that** the substrate comprises at least one layer composed of plastic.

6. The security substrate according to at least one of claims 1 to 5, **characterized in that** the substrate is designed to be strip-shaped or patch-shaped.

7. The security substrate according to at least one of claims 1 to 6, **characterized in that** the substrate is designed as a security thread or as a security paper for value documents.

8. A value document, such as a banknote, identification card or the like, **characterized in that** said document comprises a substrate according to at least one of claims 1 to 7.

9. A method for manufacturing a security substrate according to at least one of claims 1 to 7 that comprises the following steps:
- providing a carrier material, and
- furnishing the carrier material with at least a first and a second sub-region, the first sub-region comprising anatase and no rutile, and the second sub-region rutile and no anatase,
**characterized in that**
- the first and/or second sub-region is imprinted on the surface of the substrate.

10. The method for manufacturing a security substrate according to claim 9, **characterized in that** the carrier material comprises at least one layer of paper or at least one layer of plastic or a combination thereof.

11. The method for manufacturing a security substrate according to claim 9 or 10, **characterized in that** the first sub-region is applied on the surface and/or introduced into the volume of the substrate.

12. The method for manufacturing a security substrate according to at least one of claims 9 to 11, **characterized in that** the second sub-region is applied on the surface and/or introduced into the volume of the substrate.

13. The use of a security substrate according to at least one of claims 1 to 7 as a security element, security paper, value document or the like.

14. A method for checking, especially the authenticity of, a security substrate according to at least one of claims 1 to 7, the security substrate being illuminated, spatially resolved, with ultraviolet light, and the ultraviolet light transmitted or reflected by the security substrate being assessed for the verification of the authenticity of the security substrate, **characterized in that** it is assessed whether the different spectra of anatase and rutile in relation to the sub-regions are perceptible in the UV spectral range.

## Revendications

1. Substrat de sécurité pour des papiers de sécurité, des documents de valeur et similaires, doté d'au moins une première zone partielle (2) et d'au moins une deuxième zone partielle (3), la première zone partielle comprenant de l'anatase et pas de rutile et la deuxième zone partielle comprenant du rutile et pas d'anatase, **caractérisé en ce que** la première et/ ou la deuxième zone partielle est imprimée sur la surface du substrat.

2. Substrat de sécurité selon la revendication 1, **caractérisé en ce que** la première zone partielle est présente sur la surface ou dans le volume du substrat.

3. Substrat de sécurité selon la revendication 1 ou 2, **caractérisé en ce que** la deuxième zone partielle est présente sur la surface ou dans le volume du substrat.

4. Substrat de sécurité selon au moins l'une quelconque des revendications 1 à 3, **caractérisé en ce que** le substrat comprend au moins une couche de papier, de préférence, de papier de coton.

5. Substrat de sécurité selon au moins l'une quelconque des revendications 1 à 4, **caractérisé en ce que** le substrat comprend au moins une couche de matière plastique.

6. Substrat de sécurité selon au moins l'une quelconque des revendications 1 à 5, **caractérisé en ce que** le substrat est conçu sous forme de bande ou sous forme de patch.

7. Substrat de sécurité selon au moins l'une quelconque des revendications 1 à 6, **caractérisé en ce que** le substrat est conçu sous la forme d'un fil de sécurité ou d'un papier de sécurité pour des documents de valeur.

8. Document de valeur, tel qu'un billet de banque, une carte d'identité ou similaires **caractérisé en ce que** celui-ci comprend un substrat selon au moins l'une quelconque des revendications 1 à 7.

9. Procédé destiné à fabriquer un substrat de sécurité selon au moins l'une quelconque des revendications 1 à 7, qui comprend les étapes suivantes :
- de la mise à disposition d'une matière de support, et
- de l'équipement de la matière de support avec au moins une première et une deuxième zones partielles, la première zone partielle comprenant de l'anatase et pas de rutile et la deuxième zone partielle comprenant du rutile et pas d'anatase,
**caractérisé en ce**
- **qu'**on imprime la première et/ ou la deuxième zone partielle sur la surface du substrat.

10. Procédé destiné à fabriquer un substrat de sécurité selon la revendication 9, **caractérisé en ce que** la matière de support comporte au moins une couche de papier ou au moins une couche de matière plastique ou une association de ces derniers.

11. Procédé destiné à fabriquer un substrat de sécurité selon la revendication 9 ou 10, **caractérisé en ce qu'**on applique la première zone partielle sur la surface et/ ou on l'introduit dans le volume du substrat.

12. Procédé destiné à fabriquer un substrat de sécurité selon au moins l'une quelconque des revendications 9 à 11, **caractérisé en ce qu'**on applique la deuxième zone partielle sur la surface et/ou on l'introduit dans le volume du substrat.

13. Utilisation d'un substrat de sécurité selon au moins l'une quelconque des revendications 1 à 7 en tant qu'élément de sécurité, papier de sécurité, document de valeur ou similaires.

14. Procédé destiné à vérifier notamment l'authenticité d'un substrat de sécurité selon au moins l'une quelconque des revendications 1 à 7, lors duquel on éclaire le substrat de sécurité avec de la lumière ultraviolette avec une résolution locale et on évalue la lumière ultraviolette transmise ou réfléchie par le substrat de sécurité pour vérifier l'authenticité du substrat de sécurité, caractérisé en ce dans la gamme spectrale des UV, les différents spectres de l'anatase et du rutile sont identifiables en rapport aux zones partielles.
